**Europäisches Patentamt**

**European Patent Office**

**Office européen des brevets**

(19)

(11) Veröffentlichungsnummer : **0 367 172 B1**

(12)

# EUROPÄISCHE PATENTSCHRIFT

(45) Veröffentlichungstag der Patentschrift :
**15.07.92 Patentblatt 92/29**

(51) Int. Cl.⁵ : **B60Q 1/30**

(21) Anmeldenummer : **89120081.8**

(22) Anmeldetag : **30.10.89**

(54) **Vorrichtung zur Aufnahme einer Fahrzeugrückbeleuchtung.**

(30) Priorität : **04.11.88 DE 3837437**

(43) Veröffentlichungstag der Anmeldung :
**09.05.90 Patentblatt 90/19**

(45) Bekanntmachung des Hinweises auf die
Patenterteilung :
**15.07.92 Patentblatt 92/29**

(84) Benannte Vertragsstaaten :
**AT IT NL SE**

(56) Entgegenhaltungen :
**DE-A- 1 925 432**
**US-A- 4 314 315**

(73) Patentinhaber : **Hella KG Hueck & Co.**
**Rixbecker Strasse 75 Postfach 28 40**
**W-4780 Lippstadt (DE)**

(72) Erfinder : **Buschmeier, Konrad**
**Waldweg 25**
**W-4796 Salzkotten (DE)**
Erfinder : **Schmidt, Gerd-Otto**
**Im Holz 28**
**W-5620 Velbert 15 (DE)**

EP 0 367 172 B1

## Beschreibung

Die Erfindung betrifft eine Vorrichtung zur Aufnahme einer Fahrzeugrückbeleuchtung, die aus einem das Kennzeichen und die Kennzeichenleuchten aufnehmenden Mittelteil und zwei die rückwärtigen Signalleuchten aufnehmenden Außenteile besteht, wobei die Außenteile und das Mittelteil ineinanderschiebbar sind.

Eine solche Vorrichtung ist bereits aus dem DE-GM 81 09 007 bekannt. Hierin ist eine Fahrzeugbeleuchtungsvorrichtung dargestellt, die im Spritzgieß- bzw. Tiefziehverfahren aus Kunststoff hergestellt ist. Ein wesentlicher Nachteil dieser Herstellverfahren ist, daß die wesentlichen Teile zweischalig bzw. offenwandig und unter erheblichen Nachbearbeitungsaufwand hergestellt werden müssen. Außerdem zieht diese Art der Fertigung eine Vielzahl von Einzelteilen für die Montage nach sich, so daß diese umständlich, zeitaufwendig und damit kostenungünstig ist. Ein weiterer Nachteil, der in diesem Verfahren hergestellten Vorrichtung ist, daß sie nur in geringem Maße dazu in der Lage ist, Stöße aufzunehmen, wie sie z. B. beim Rangieren eines Fahrzeugs auftreten können. Weiterhin ist es ungünstig, daß eine solche Vorrichtung nicht ohne weiteres von einem Nichtfachmann montiert werden kann, da sie nicht komplett vorgefertigt und als Nachrüstbausatz, beispielsweise für ein Anhängefahrzeug geliefert werden kann. Als ein weiterer Nachteil macht sich die mangelnde Steifigkeit von den im Spritzgieß- oder Tiefziehverfahren hergestellten Teilen bemerkbar.

Aufgabe der Erfindung ist es, eine Vorrichtung zur Aufnahme einer Fahrzeugbeleuchtung zu gestalten, die rationell für verschiedene Fahrzeugbreiten herzustellen ist, keine aufwendigen Nacharbeiten erfordert, leicht vom Gewicht und montagefreundlich ist, schützende bzw. stoßaufnehmende Eigenschaften besitzt und weitestgehend frei ist, hinsichtlich seiner stilistischen Ausbildung.

Diese Aufgabe wird erfindungsgemäß dadurch gelöst, daß alle drei Teile der Aufnahmevorrichtung für eine Fahrzeugrückbeleuchtung als Blasformkörper ausgebildet sind. Diese im Blasverfahren erstellte Vorrichtung erfüllt in vorteilhafter Weise die Forderung an eine mit geringstem Nacharbeitungsaufwand hoher Steifigkeit und dekorativem Aussehen erstellte Aufnahme für eine Fahrzeugrückbeleuchtung.

Dabei erweist es sich als vorteilhaft, daß das Mittelteil im mittleren Bereich eine Mulde zur Aufnahme des Kennzeichenschildes aufweist, in deren Randflächen die Kennzeichenleuchten eingesetzt sind. Durch diese Anbringung sind das Kennzeichen, sowie auch die Kennzeichenleuchten, optimal geschützt gegen Stöße beim Rangieren aber auch durch eine beispielsweise vorhandene Ladeklappe, die beim öffnen zur Anlage kommt. Auch ermöglicht die Mulde eine einfachere Anordnung der Kennzeichenleuchten bei guter Ausleuchtung des Kennzeichenschildes.

Eine weitere vorteilhafte Ausführung schützt in ähnlicher Weise die Signalleuchten dadurch, daß die Außenteile eine Ausnehmung aufweisen, in die die Signalleuchten eingesetzt sind, wobei die Einformung zur Aufnahme der Signalleuchten so tief ausgeführt ist, daß die Leuchten mit dem oberen Rand der Mulde bündig abschließen oder gegenüber diesem zurückversetzt angeordnet sind. Neben dem Schutz durch Rammoder Rangierstöße ermöglicht diese Anordnung, beispielsweise bei einem PKW-Anhänger, auch das aufgerichtete platzsparende Abstellen auf der rückwärtigen Ladeklappe bzw. der sie umschließenden Vorrichtung ohne Beschädigung der Leuchten.

Damit das Leuchtenunterteil nach außen in der Einformung verdeckt bleibt, weist die Einformung auf der zur benachbarten Seitenfläche des Fahrzeugs liegenden Seite vorteilhafterweise einen vorstehenden Steg auf.

Für die Anbringung der Dreieckrückstrahler ist es günstig, daß in die beiden Außenteile des Übergangs zum Mittelteil Einsenkungen eingebracht sind, die in Form und Größe den Dreieckrückstrahlern angepaßt sind. Dabei ist es zweckmäßig, daß eine Kante der Einsenkung und damit auch eine Kante des Rückstrahlers parallel zum übergang vom Außenteil zum Mittelteil verläuft. Dies sorgt vor allem für einen harmonischen übergang vom Mittelteil zu den Außenteilen.

In einer weiteren vorteilhaften Ausführung der Vorrichtung weisen die Außenteile Aufnahmeöffnungen auf, die in ihrer Umfangsform und Größe dem Querschnitt der darin eingeschobenen Enden des Mittelteils entsprechen, wobei das in die Aufnahmeöffnung eingesetzte Mittelteil von der Wandung der öffnung eng umfaßt ist. Hierdurch wird eine durch die Montage günstige Steckbarkeit aller Teile gewährleistet, wobei der enge Sitz ein Eindringen von Schmutz und Feuchtigkeit weitestgehend vermeidet, aber auch eine leichte Austauschbarkeit im Falle eines Crashes möglich ist.

Gemäß einer weiteren vorteilhaften Ausgestaltung der Erfindung weist das Mittelteil an seinen in die Außenteile ragenden Endabschnitte absatzförmige Verjüngungen im Bereich der am Fahrzeug anliegenden Seitenfläche auf. Diese Verjüngungen erlauben es, das Mittelteil zuerst am Fahrzeug zu montieren und dann einzeln die Außenteile aufzuschieben und zu befestigen.

Daß die Vorrichtung auch eine abstützende Wirkung hat, macht sich dadurch vorteilhaft bemerkbar, in dem die Außenteile als Winkelstücke ausgeführt sind, deren Schenkel im angebauten Zustand horizontal, sowie vertikal verlaufen. Durch diese feststehenden Winkel, beispielsweise an einer Kastenladefläche angebracht, ist

2

es möglich, den Seitenwänden bei einer geöffneten Heckladeklappe zusätzlichen Halt zu verleihen.

Gemäß einer anderen vorteilhaften Ausführung sind in die dem Fahrzeug seitlich abgewandten Flächen der vertikal verlaufenden Schenkel der Außenteile Einsenkungen angebracht, die in Form und Größe den Seitenrückstrahlern entsprechen. Diese sind durch ihre versenkte Einbauweise im wesentlichen vor Verschmutzung geschützt und gewährleisten durch ihren bündigen Sitz mit der Oberfläche des Außenteils eine strömungsgünstige Außenfläche.

Weiterhin ist es vorteilhaft, daß das Mittelteil in seiner Länge, in Abhängigkeit zur Breite des vorgesehenen Fahrzeugs, durch symmetrisches Kürzen der Endabschnitte angepaßt ist. Dabei sorgt eine an der dem Fahrzeug zugewandten Seite des Mittelteils befindliche Wulst für die Zentrierung am Fahrzeug. Dadurch wird eine mit geringstem Aufwand anpaßbare Gestaltung der erfindungsgemäßen Vorrichtung an verschiedenste Fahrzeugtypen gewährleistet.

Zum Zwecke der besseren Strömungsverhältnisse unter dem Fahrzeug und dem besseren Ableitverhalten von unebenen bzw. sperrigen Bodenbewuchs ist es vorteilhaft, daß das Mittelteil an der in Fahrtrichtung weisenden Seite eine im unteren Teil angeordnete, rückspringende Abschrägung aufweist, die sich auch über die Verbindungsstelle hinweg zum horizontalen Schenkel der Außenteile fortsetzt.

Keilförmige Einformungen, die vorteilhafterweise im horizontalen Schenkel der Außenteile eingebracht sind, stellen eine stabilitätsfördernde Maßnahme dar, die vor allem hinsichtlich eines abzustellenden Anhängefahrzeugs als Kippkante wirksam wird.

Gemäß einer weiteren zweckmäßigen Ausführungsausführung weist das Mittelteil im Bereich der Rückwandung eine rinnenartige Einformung auf, welche der Verkabelung mit den Leuchten dient. Dabei geht die rinnenartige Einformung über in den vom Außenteil überlappten Bereich der Steckverbindung und erlaubt somit die Weiterleitung des Kabels in den geschützten Hohlraum der Außenteile.

Ein Ausführungsbeispiel, aus dem weitere Einzelheiten und zweckmäßige Ausgestaltungen hervorgehen, wird im folgenden anhand der Zeichnung näher erläutert.

Darin zeigt:

Figur 1 die Perspektivansicht eines linken Außenteils,

Figur 2 die innere Seitenansicht des linken Außenteils,

Figur 3 die äußere Seitenansicht des linken Außenteils,

Figur 4 die Rückansicht eines abgeschnittenen symmetrischen Mittelteils,

Figur 5 eine Seitenansicht des Mittelteils,

Figur 6 eine Draufsicht des abgeschnittenen Mittelteils.

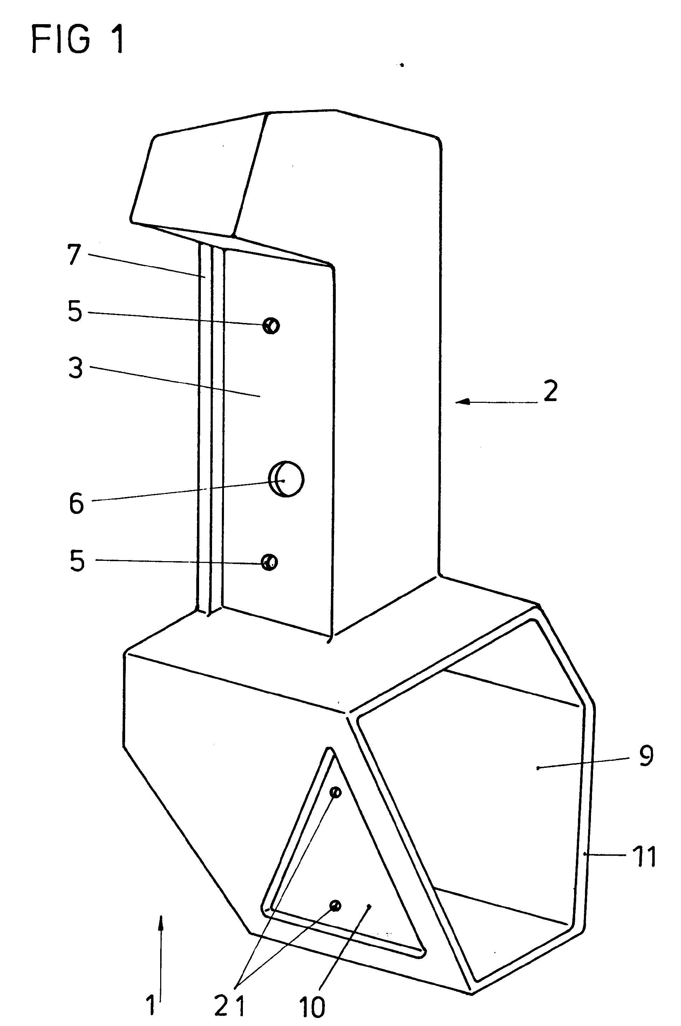

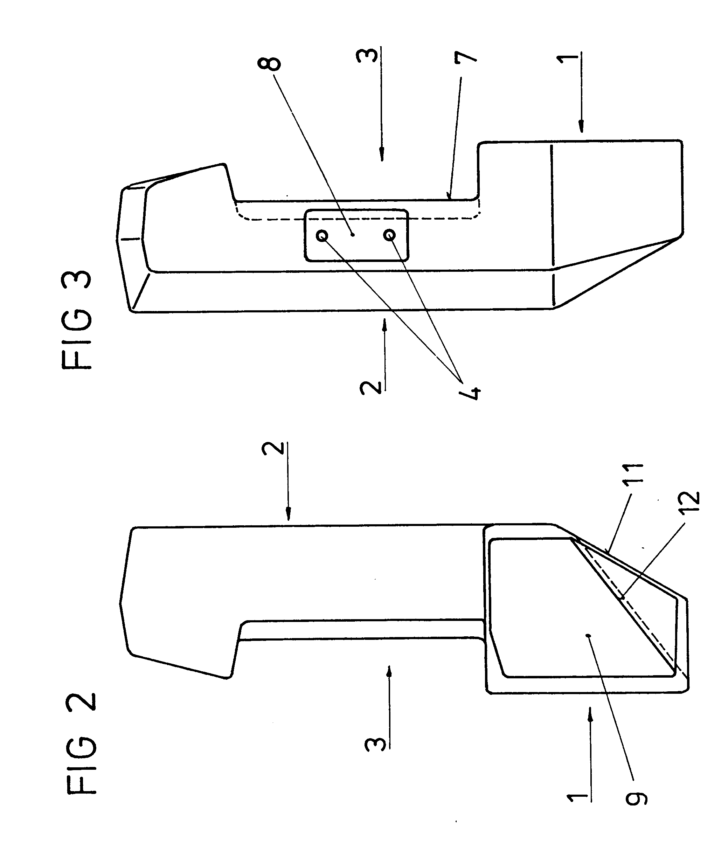

Das in Figur 1 bis 3 dargestellte linke Außenteil der erfindungsgemäßen Vorrichtung setzt sich aus einem horizontalen Schenkel (1) und einem vertikalen Schenkel (2) eines Winkelstückes zusammen. Im vertikalen Schenkel (1) befindet sich eine Einformung (3) zur Aufnahme einer nicht dargestellten Signalleuchte, sowie Bohrungen (5) zu deren Befestigung und eine öffnung (6) für die Kabelzuführung der Signalleuchte. Ein vorstehender Steg (7) verdeckt das Leuchtenunterteil, auf der dem Fahrzeug abgewandten Fläche. Weiterhin befindet sich in der dem Fahrzeug seitlich abgewandten Fläche des vertikalen Schenkels (2) eine Einsenkung (8), die in Form und Größe dem Seitenrückstrahler entspricht, wobei in dem Boden der Einsenkung (8) Befestigungslöcher (4) eingebracht sind.

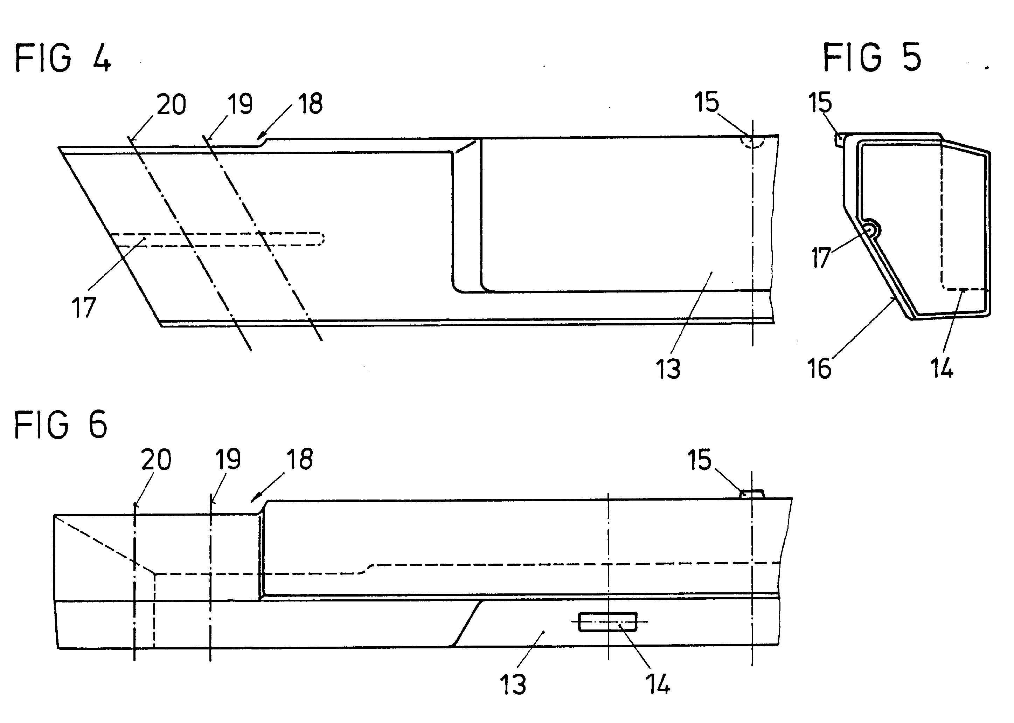

Unterhalb der Einformung (3) schließt sich der horizontale Schenkel (1) des linken Außenteils an. Am Ende des Schenkels (1), nahe einer übergangsöffnung (9) zum Mittelteil, befindet sich eine Einsenkung (10), die in Form und Größe den Dreieckrückstrahlern entspricht sowie Bohrungen (21) zu deren Befestigung. In einer der Einsenkung (10) gegenüberliegenden Seite befindet sich eine im unteren Teil angeordnete rückspringende Abschrägung (11), in deren Verlauf eine keilförmige Einformung (12) eingebracht ist. Das zwischen zwei Außenteilen (linkes sowie rechtes Außenteil ist seitenverkehrt identisch) eingeschobene Mittelteil ist in Figur 4 bis 6 dargestellt. Das Mittelteil besitzt in seinem mittleren Bereich eine Mulde (13) zur Aufnahme des Kennzeichenschildes. Dabei sind in der Randfläche der Mulde (13) Kennzeichenleuchten (14) angeordnet. Eine der Zentrierung des Mittelteils dienende Wulst (15) befindet sich in der Mitte von der dem Fahrzeug zugewandten Seite des Mittelteils.

Weiterhin weist das Mittelteil an der in Fahrtrichtung weisenden Seite eine im unteren Teil angeordnete rückspringende Abschrägung (16) auf, die konturengleich mit der Abschrägung (11) des Außenteils verläuft. Im oberen Bereich der Abschrägung (16) befinden sich rinnenartige Einformungen (17), die sich entlang absatzförmiger Verjüngungen (18) der Endabschnitte des Mittelteils erstrecken. Innerhalb der durch die Linien (19, 20) dargestellten Schnittebenen kann das Mittelteil symmetrisch auf Länge gekürzt werden.

Für die Montage der gesamten Vorrichtung am Fahrzeug können die Signalleuchten, Rückstrahler, Kennzeichenleuchten nebst Kennzeichen und Kabelbäumen bereits vormontiert werden. In diesem Zusammenhang wird auch das Mittelteil auf die für die Breite des Fahrzeugs vorgesehene Länge gemäß der Linien (19, 20) symmetrisch gekürzt. Zuerst erfolgt das Anbringen des Mittelteils am Fahrzeugboden. Dabei orientiert man die Mittigkeit des Mittelteils über die Wulst (15). Anschließend können die winkligen Außenteile mit ihren öffnungen (9) im horizontalen Schenkel (1) auf die Endabschnitte der Verjüngung (18) des Mittelteils aufgesteckt und anschließend am Fahrzeug befestigt werden. Die Befestigung erfolgt über am Fahrzeug anliegende Flächen des horizontalen Schenkels (1) sowie des vertikalen Schenkels (2). Dabei überlappt der horizontale Schenkel (1) die Verjüngung (18) und damit auch die Einformungen (17). Der Kabelbaum wird aus dem horizontalen Schenkel (1) des Außenteils heraus und in der Einformung (17) geschützt weitergeführt.

**Patentansprüche**

1. Vorrichtung zur Aufnahme einer Fahrzeugrückbeleuchtung, die aus einem das Kennzeichen und die Kennzeichenleuchten (14) aufnehmenden Mittelteil und zwei die rückwärtigen Signalleuchten aufnehmenden Außenteile besteht, wobei die Außenteile und das Mittelteil ineinanderschiebbar sind, dadurch gekennzeichnet, daß alle drei Teile der Aufnahmevorrichtung als Blasformkörper ausgebildet sind.

2. Vorrichtung nach Anspruch 1, dadurch gekennzeichnet, daß das Mittelteil im mittleren Bereich eine Mulde (13) zur Aufnahme des Kennzeichenschildes aufweist, in deren Randflächen die Kennzeichenleuchten (14) eingesetzt sind.

3. Vorrichtung nach Anspruch 1 oder 2, dadurch gekennzeichnet, daß die Außenteile eine Einformung (3) aufweisen, in die die Signalleuchten eingesetzt sind.

4. Vorrichtung nach Anspruch 3, dadurch gekennzeichnet, daß die Einformungen (3) zur Aufnahme der Signalleuchten so tief ausgeführt sind, daß die Leuchten mit dem oberen Rand der Einformung (3) bündig abschließen oder gegenüber dieser zurückversetzt angeordnet sind.

5. Vorrichtung nach Anspruch 3 oder 4, dadurch gekennzeichnet, daß die Einformung (3) auf der zur benachbarten Seitenfläche des Fahrzeugs liegenden Seite einen vorstehenden Steg (7) aufweist, der in der Höhe der Höhe des Leuchtenunterteils entspricht.

6. Vorrichtung nach einem der vorstehenden Ansprüche, dadurch gekennzeichnet, daß in die beiden Außenteile in der Nähe des übergangs zum Mittelteil Einsenkungen (10) eingebracht sind, die in Form und Größe den Dreieckrückstrahlern angepaßt sind.

7. Vorrichtung nach Anspruch 5 oder einem der vorstehenden Ansprüche, dadurch gekennzeichnet, daß eine Kante der Einsenkungen (10) parallel zum übergang vom Außenteil zum Mittelteil verläuft.

8. Vorrichtung nach einem der vorstehenden Ansprüche, dadurch gekennzeichnet, daß die übergangsöffnung (9) für das Mittelteil in den Außenteilen in ihrer Umfangsform und Größe dem Querschnitt der darin eingeschobenen Enden des Mittelteils entspricht.

9. Vorrichtung nach Anspruch 6, dadurch gekennzeichnet, daß das Mittelteil von den Außenteilen eng umfaßt ist.

10. Vorrichtung nach Anspruch 8 oder einem der vorstehenden Ansprüche, dadurch gekennzeichnet, daß das Mittelteil an seinen in die Außenteile ragenden Endabschnitte absatzförmige Verjüngungen (18) im Bereich der am Fahrzeug anliegenden Seitenfläche aufweist.

11. Vorrichtung nach einem der vorstehenden Ansprüche, dadurch gekennzeichnet, daß die Außenteile als Winkelstücke ausgeführt sind, deren Schenkel (1, 2) im angebauten Zustand horizontal sowie vertikal verlaufen.

12. Vorrichtung nach Anspruch 9 oder einem der vorstehenden Ansprüche, dadurch gekennzeichnet, daß in die dem Fahrzeug seitlich abgewandten Flächen der vertikal verlaufenden Schenkel (2) der Außenteile Einsenkungen (8) angebracht sind, die in Form und Größe den Seitenrückstrahlern entsprechen.

13. Vorrichtung nach Anspruch 2 oder einem der vorstehenden Ansprüche, dadurch gekennzeichnet, daß das Mittelteil in seiner Länge in Abhängigkeit zur Breite des vorgesehenen Fahrzeugs durch symetrisches Kürzen der Endabschnitte angepaßt ist.

14. Vorrichtung nach Anspruch 12, dadurch gekennzeichnet, daß das Mittelteil an der dem Fahrzeug zugewandten Seite eine Wulst (15) zur Zentrierung des Mittelteils am Fahrzeug aufweist.

15. Vorrichtung nach Anspruch 12 oder einem der vorstehenden Ansprüche, dadurch gekennzeichnet, daß das Mittelteil an der in Fahrtrichtung weisenden Seite eine im unteren Teil angeordnete, rückspringende Abschrägung (16) aufweist.

16. Vorrichtung nach Anspruch 15 oder einem der vorstehenden Ansprüche, dadurch gekennzeichnet, daß die Abschrägung (11) sich über die Verbindungsstelle hinweg im horizontalen Schenkel (1) der Außenteile fortsetzt.

17. Vorrichtung nach einem der vorstehenden Ansprüche dadurch gekennzeichnet, daß in dem horizontalen Schenkel (1) der Außenteile keilförmige Einformungen (12) eingebracht sind.

18. Vorrichtung nach Anspruch 10 oder einem der anderen vorstehenden Ansprüche, dadurch gekennzeichnet, daß das Mittelteil im Bereich der Rückwandung eine rinnenartige Einformung (17) aufweist.

## Claims

1. Device for mounting the rear lights of a vehicle, comprising a central part receiving the registration plate and the registration plate lights (14) and two outer parts receiving the rear signal lights, the outer parts and the central part being able to slide one into the other, characterised in that all three parts of the mounting device are formed as a blow moulding.

2. Device according to Claim 1, characterised in that the central part has in the central region a hollow (13) for receiving the registration plate and in the marginal areas of which the registration plate lights (14) are fitted.

3. Device according to Claim 1 or 2, characterised in that the outer parts have a moulded recess (3), into which the signal lights are fitted.

4. Device according to Claim 3, characterised in that the moulded recesses (3) for receiving the signal lights are made to such a depth that the lights terminate flush with the upper edge of the moulded recess (3) or are arranged set back from the latter.

5. Device according to Claim 3 or 4, characterised in that the moulded recess (3) on the side lying towards the neighbouring side surface of the vehicle has a projecting web (7), which corresponds in height to the height of the lower part of the light.

6. Device according to one of the preceding claims, characterised in that depressions (10) which are adapted in shape and size to the triangular reflex reflectors are made in the two outer parts in the vicinity of the transition to the central part.

7. Device according to Claim 5 or one of the preceding claims, characterised in that one edge of the depressions (10) runs parallel to the transition from the outer part to the central part.

8. Device according to one of the preceding claims, characterised in that the transitional opening (9) for the central part in the outer parts corresponds in its peripheral shape and size to the crows-section of the ends of the central part pushed into it.

9. Device according to Claim 6, characterised in that the central part is closely enclosed by the outer parts.

10. Device according to Claim 8 or one of the preceding claims, characterised in that the central part has on its end sections protruding into the outer parts neck-shaped constrictions (18) in the region of the side surface bearing against the vehicle.

11. Device according to one of the preceding claims, characterised in that the outer parts are made as angle pieces, the legs (1, 2) of which run horizontally and vertically in the attached state.

12. Device according to Claim 9 or one of the preceding claims, characterised in that depressions (8) which correspond in shape and size to the side reflex reflectors are provided in the surfaces of the vertically running legs (2) of the outer parts facing laterally away from the vehicle.

13. Device according to Claim 2 or one of the preceding claims, characterised in that the central part is adapted in its length according to the width of the intended vehicle by symmetrical shortening of the end sections.

14. Device according to Claim 12, characterised in that the central part has on the side facing towards the vehicle a bead (15) for centring the central part on the vehicle.

15. Device according to Claim 12 or one of the preceding claims, characterised in that the central part has on the side facing in the direction of travel a falling-away bevel (16), arranged in the lower part.

16. Device according to Claim 15 or one of the preceding claims, characterised in that the bevel (11) continues beyond the connecting point in the horizontal leg (1) of the outer parts.

17. Device according to one of the preceding claims, characterised in that wedge-shaped moulded recesses (12) are made in the horizontal leg (1) of the outer parts.

18. Device according to Claim 10 or one of the other preceding claims, characterised in that the central part has a channel-like moulded recess (17) in the region of the rear wall.

## Revendications

1. Dispositif de logement de l'éclairage arrière d'un véhicule, composé d'une partie centrale logeant la plaque d'immatriculation et les feux éclaire-plaque (14) et de deux parties externes logeant les feux de signalisation arrière, les parties externes et la partie centrale étant télescopiques, caractérisé en ce que les trois parties du dispositif de logement se présentent sous la forme de pièces moulées par soufflage.

2. Dispositif selon la revendication 1, caractérisé en ce que la partie centrale présente dans sa zone centrale une cuvette (13) de logement de la plaque d'immatriculation dans les surfaces périphériques de laquelle sont placés les feux éclaire-plaque (14).

3. Dispositif selon la revendication 1 ou 2, caractérisé en ce que les parties externes présentent une partie moulée en creux (3) dans laquelle sont placés les feux de signalisation.

4. Dispositif selon la revendication 3, caractérisé en ce que les parties moulées en creux (3) de logement des feux de signalisation sont si profondes que les feux sont au même niveau que le bord supérieur de la partie moulée en creux (3) ou sont en retrait par rapport à celui-ci.

5. Dispositif selon la revendication 3 ou 4, caractérisé en ce que la partie moulée en creux (3) présente, sur le côté tourné vers la surface latérale voisine du véhicule une arête saillante (7) qui correspond en hauteur à la hauteur de la partie inférieure des feux.

6. Dispositif selon l'une des revendications précédentes, caractérisé en ce que sont ménagées dans les deux parties externes, à proximité de la jonction avec la partie centrale, des dépressions (10) adaptées, par leur forme et leur taille, aux cataphotes triangulaires.

7. Dispositif selon la revendication 5 ou l'une des revendications précédentes, caractérisé en ce qu'une arête des dépressions (10) est parallèle à la jonction entre la partie externe et la partie centrale.

8. Dispositif selon l'une des revendications précédentes, caractérisé en ce que l'orifice de jonction (9) des parties externes destiné à la partie centrale correspond par sa forme périphérique et sa taille à la section transversale des extrémités de la partie centrale qui y sont enfoncées.

9. Dispositif selon la revendication 6, caractérisé en ce que la partie centrale est étroitement entourée par les parties externes.

10. Dispositif selon la revendication 8 ou l'une des revendications précédentes, caractérisé en ce que la partie centrale présente au niveau de ses tronçons terminaux enfoncés dans les parties externes des décrochements (18) en forme de gradins au niveau de la surface latérale reposant contre le véhicule.

11. Dispositif selon l'une des revendications précédentes, caractérisé en ce que les parties externes ont la forme de cornières dont les ailes (1, 2) sont horizontale et verticale à l'état monté.

12. Dispositif selon la revendication 9 ou une des revendications précédentes, caractérisé en ce que sont ménagées, dans les surfaces latéralement opposées au véhicule, des ailes verticales (2) des parties externes, des dépressions (8) correspondant par leur forme et leur taille aux cataphotes latéraux.

13. Dispositif selon la revendication 2 ou une des revendications précédentes, caractérisé en ce que la longueur de la partie latérale est adaptée à la largeur du véhicule prévu, par raccourcissement symétrique des tronçons terminaux.

14. Dispositif selon la revendication 12, caractérisé en ce que la partie centrale présente sur le côté tourné vers le véhicule un bourrelet (15) de centrage de la partie centrale sur le véhicule.

15. Dispositif selon la revendication 12 ou une des revendications précédentes, caractérisé en ce que la partie centrale présente sur sa face orientée dans le sens de déplacement un chanfrein (16) à ressort, disposé dans la partie inférieure.

16. Dispositif selon la revendication 15 ou une des revendications précédentes, caractérisé en ce que le chanfrein (11) se poursuit au-delà de l'emplacement du raccord dans l'aile horizontale (1) des parties externes.

17. Dispositif selon l'une des revendications précédentes, caractérisé en ce que des parties moulées en creux (12) cunéiformes sont ménagées dans l'aile horizontale (1) des parties externes.

18. Dispositif selon la revendication 10 ou l'une des revendications précédentes, caractérisé en ce que la partie centrale présente une partie moulée en creux (17) en forme de gouttière au niveau de sa paroi arrière.

# FIG 1

# FIG 2

# FIG 3

EP 0 367 172 B1

FIG 4

20  19  18                                    15

17

13

FIG 5

15                15

17

16        14

FIG 6

20  19  18                                    15

13        14

EP 0 367 172 B1